# EUROPÄISCHE PATENTSCHRIFT

(11) **EP 2 332 869 B1**
(45) Veröffentlichungstag und Bekanntmachung des Hinweises auf die Patenterteilung: **04.07.2012**
(21) Anmeldenummer: 10014863.4
(22) Anmeldetag: 23.11.2010
(51) Int. Cl.: F16K 5/18, B65G 53/56, F16K 11/085

(54) **Förderrohrweiche**
Switch for transport tube
Aiguillage pour tuyau de transport

(30) Priorität: 09.12.2009 DE 102009057650
(43) Veröffentlichungstag der Anmeldung: 15.06.2011
(73) Patentinhaber: GESRA Gerätebau GmbH, 88361 Altshausen (DE)
(72) Erfinder: Adam, Alfred, 88255 Baienfurt (DE)
(74) Vertreter: Riebling, Peter

(56) Entgegenhaltungen:
- EP-A1- 0 137 058
- EP-A2- 0 344 584
- WO-A1-2004/063063
- CH-A- 140 556
- DE-A1- 2 451 824
- DE-C1- 10 109 916
- DE-U- 1 795 683
- FR-A1- 2 736 701
- GB-A- 2 264 160
- US-A- 1 329 016
- US-A- 5 727 595

## Beschreibung

### Gebiet der Erfindung

Gegenstand der Erfindung ist eine 3-Wegeweiche für Schüttgüter und Flüssigkeiten nach dem Oberbegriff des Patentanspruches 1.

### Stand der Technik

Rohrweichen für pneumatisch zu fördernde Schüttgüter und deren Dichtungsanordnungen sind bereits aus der DE 102 19 989 B3 bekannt. Die Weiche besteht aus einem Gehäuse mit einem drehbar darin angeordneten Rotor, wobei das Gehäuse wenigstens drei Ein- bzw. Ausgänge aufweist. Über einen Einsteckstutzen wird der jeweilige Kanal mit dem Rotor verbunden. Zur Abdichtung dient eine nicht elastische Dichtungshülse mit einer Verdrehsicherung, welche der Dichtungshülse lediglich nur ein axiales Bewegungsspiel ermöglicht. Dies stellt einen wesentlichen Nachteil dar, da durch die Drehung des Rotors Überreste des zu fördernden Materials in das Rohrweichengehäuse gedrückt werden. Eine Reinigung der Rohrweiche kann nur durch eine Demontage erfolgen.

Die Offenlegungsschrift DE 196 11 121 A1 zeigt eine Rohrweiche für pneumatische geförderte Schüttgüter. Die Weiche besteht aus einem Gehäuse mit drei zueinander angeordneten Rohranschlüssen und einem in dem Gehäuse drehbargelagerten Drehzapfen. Kern der Erfindung ist, dass das Küken durch einen flexiblen Kunststoffspiralschlauch ersetzt wird. Bei dieser Ausführungsform ist jedoch keine komplette Absperrung einer Rohrleitung möglich und ebenso lässt sich nicht das Gehäuse reinigen.

Mit dem Gegenstand der DE 42 14 761 C1 wird eine Rohrweiche beschrieben, die über ein hohlzylinderförmiges Gehäuse verfügt, in dem ein Küken um eine Drehachse drehbar angeordnet ist. Durch eine verschließbare Öffnung im Gehäuse ist es möglich, das Küken zu entnehmen. Die Aufgabe der Erfindung ist, eine Rohrweiche, die leicht inspiziert, gereinigt und gewartet werden kann. Für die Reinigung muss hierfür die Öffnung des Kükengehäuses geöffnet werden. Dies stellt einen wesentlichen Nachteil dar, da durch Reinigungswartung die gesamte Anlage außer Betrieb gebracht werden muss.

Mit der GB2 264 160 A, die eine Förderrohrweiche gemäß dem Oberbegriff der Anspruchs 1 offenbart, der EP0 344 584 A2 und der WO 2004/063063 A1 sind Förderrohrweichen bekannt, bei denen das Drehküken eine abgeschrägte, ballige oder rotationssymmetrische Form auweist. Das Gehäuse mit dem dort drehbar angeordneten Drehküken ist jedoch nicht für eine Durchlaufreinigung geeignet, denn es sind keine Zu- und Ablauföffnungen vorgesehen, die eine Reinigung an Ort und Stelle ermöglichen und den restlosen Ablauf der Reinigungsflüssigkeit gewährleisten.

Die DE 24 51 824 A1 sieht die Spülung der Förderrohrweiche mit einer Spülflüssigkeit vor. Die Föderrohrweiche hat ein konisches Drehküken mit einem daran angepassten Gehäuse, in das jeweils diametral gegenüberliegend die ankommende Gemischleitung und die Spülflüssigkeitsleitung einerseits und um 90 Grad versetzt die beiden weiterführenden Rohrleitungen andererseits einmünden. Im konischen Drehküken sind zwei voneinander getrennte Durchflußkanäle angeordnet, die jeweils zwei benachbarte um 90 Grad versetzte und mit den Anschlußöffnungen im Gehäuse korrespondierende Durchtrittsöffnungen in der konischen Mantelfläche des Drehkükens verbinden. Das Problem der restlosen Entleerung von Spülflüssigkeit aus dem Gehäuse ist dergestalt gelöst, dass die Zu- und Abläufe der Spülflüssigkeit und die zugeordneten Küken-und Gehäusedichtugen so perfekt ausgebildet sein sollen, dass sich keine Spülflüssigkeit im Bodenbereich des Gehäuses ansammeln sollte. Die Anordnung eines Ablaufes am Bodenbereich des Gehäuses ist allerdings nicht vorgesehen, sodass beim Versagen der Dichtungen ein unerwünschter Sumpf aus Spülflüssigkeit am Boden des Gehäuses unvermeidbar ist.

Aus den oben genannten Druckschriften ergibt sich deshalb keine technische Lehre, wie eine Rohrweiche ohne den Ausbau des Drehkükens industriell gereinigt werden kann.

Bei der Produktion von Getränken, Pharmazeutika und Lebensmitteln spielt Hygiene eine bedeutende Rolle. Bei verfahrentechnischen Anlagen ist eine zuverlässige und effiziente Reinigung unumgänglich.

"Cleaning in Place" (CIP) wird bei solchen Produktionsanlagen immer mehr das geforderte Reinigungsverfahren. Dabei wird definitionsgemäß die Anlage ohne wesentliche Demontage auf den produktberührten Flächen gereinigt. Neben einer Einsparung von Zeit und Geld für eine manuelle Wartung reduziert sich auch den Verbrauch von Betriebsmitteln.
Typische Anwendungsbereiche für eine CIP-fähige Anlage sind Tanks und Silos sowie jede Art von flüssigkeitsverarbeitenden Ausrüstungen u. a. Förderrohrweichen.

Eine Variante des Reinigungsverfahrens einer CIP-fähigen Anlage in der Lebensmittelindustrie kann aus folgenden Schritten bestehen:
- Vorspülen, um grobe Verschmutzungen zu entfernen
- Reinigen mit einem alkalischen Mittel
- Reinigungsmittel ausspülen mit Wasser
- Absäuren zur Entfernung von Kalkablagerungen und Laugestein
- Säure ausspülen
- Desinfektion zur Abtötung der vegetativen Mikroorganismen
- Desinfektionsmittel ausspülen

Bisher war es in der Lebensmittelindustrie nicht möglich, eine große verfahrenstechnische Anlage mit mehreren Weichen, ohne eine Demontage von Teilen oder ohne ein Öffnen des Systems zu reinigen.
Dies führte zu langen Stillstandszeiten der gesamten Anlagen und somit zu hohen Kosten.

### Gegenstand der Erfindung

Der Erfindung liegt deshalb die Aufgabe zugrunde, eine Rohrweiche zu schaffen, welche eine Demontage bzw. ein Öffnen des Gehäuses bei der Reinigung vermeidet und bei Bedarf ein Abgang bzw. Zulauf komplett gesperrt werden kann.

Zur Lösung der gestellten Aufgabe ist die Erfindung durch die technische Lehre der Ansprüche 1 und 8 gekennzeichnet.

Die ballige Ausbildung des Gehäuses der Rohrweiche ermöglicht ein freies, selbstständiges Ablaufen der Flüssigkeit durch einen der Auslasskanäle oder durch optionale Kanäle in der Gehäusewand. Durch die Ausbildung der Auslasskanäle und Verfügbarkeit von optionalen Kanälen sind bis zu fünf Einbaulagen möglich. Alle erreichen ein selbstständiges Ablaufen der Reinigungsflüssigkeit aus der Förderrohrweiche.

Mit der gegebenen technischen Lehre ergibt sich der wesentliche Vorteil, dass in der Rohrweiche ein Spülvorgang ohne Rückstände im eingebauten Zustand des Drehkükens möglich ist.

Bei der vorliegenden Erfindung ist das Gehäuse der CIP-fähigen Weiche so ausgebildet, dass ein Spülvorgang des gesamten Innenraumes möglich ist.

Das Gehäuse ist totraumfrei ausgebildet, wobei ein gleich bleibender Querschnitt des Förderkanals besteht. Der totraumfreie Innenraum ermöglicht einen rückstandslosen Spülvorgang, bei dem alle produktberührenden Teile mit einer Flüssigkeit umspült werden können. Dieser Innenraum wird durch die ballige bzw. konvexe Form der Gehäusewände der Förderrohrweiche erreicht. Unter einer balligen Oberfläche wird eine nach oben gewölbte Gehäuseinnenwände verstanden.

Durch die Ausführungsform der Förderrohrweiche kann der komplette Produktraum getrocknet werden.

Spültaschen im Bereich der Gehäusewandung der Weiche ermöglichen einen größeren Spüldurchfluss während der Reinigung des Gehäuses und des Drehkükens.

Ein optimierter totraumfreier Innenraum des Gehäuses in Verbindung mit einer optimierten Form des Drehkükens vermeidet mögliche Toträume und somit die Ablagerung von Produktresten an diesen Stellen.

Ein weiteres wesentliches Merkmal ist das rotierende Drehküken innerhalb der Förderrohrweiche. Durch seine Geometrie und die konstruktive Ausführung kann in einer dritten Stellmöglichkeit ein Abgang bzw. Zulauf, der nicht in Verwendung steht, zwangsläufig dicht verschlossen werden. Somit dichtet das Drehküken zwangsläufig jeden nicht verwendeten Abgang bzw. Zugang druckdicht ab.

Es können einzelne Förderstränge ohne ein weiteres zusätzliches CIP-fähiges Absperrventil und ohne damit zwangsläufig entstehende Toträume, abgesperrt werden. Beim Befüllen einer Siloreihe kann beispielsweise ein Förderkanal nach dem anderen einzeln gereinigt werden. Das Benetzen des nächsten Silostranges ist somit ausgeschlossen.

Die Geometrie der Weiche ist so konzipiert, dass sie in fünf Einbaulagen eingebaut werden kann. Die konstruktive Gestaltung der Weiche erlaubt in jeder dieser fünf Einbaulagen bei durchgehender Totraumfreiheit und gleich bleibendem Leitungsquerschnitt das rückstandslose Reinigen. Bei einer Nass- bzw. Molchreinigung kann die Weiche totraumfrei nach den neuesten Vorgaben und Vorschriften gespült und desinfiziert werden.

Beim Fördern ist der Förderquerschnitt immer gleich und bewirkt somit keine Geschwindigkeitsänderungen des Produktflusses.

Neu bei der vorliegenden Erfindung ist ebenso, dass die Rohrweiche über vorgespannte Dichtungen verfügt, die zusätzlich mit Luft beaufschlagt werden.

Entscheidend bei dieser Ausführungsform ist, dass die Dichtung nicht in den Förderkanal hineinragt. Die vorgespannte Dichtung liegt nun aufgrund ihrer Geometrie in einer Montagenut an. Durch die definierte Vorspannung der Dichtung wird die Spalte von Dichtungsnut zur Dichtung verschlossen, die aufblasbare Dichtung ermöglicht eine totraumfreie Konstruktion.

Ist das Drehküken der Förderrohrweiche in der gewünschten Position, wird der Luftraum unterhalb der Dichtung über Luftkanäle mit Luft beaufschlagt. Der Luftdruck wird dabei mittels zweier Druckschalter überwacht.

Das Aufblasen der Dichtung minimiert den Verschleiß der Dichtung. Durch ein Ablassen der Luft aus dem Luftpolster unterhalb der Dichtung, wird die Dichtung von dem Drehküken beabstandet. Dies bewirkt eine Drehmomentverringerung auf den Stellmotor, was sich positiv auf die Lebensdauer des Stellmotors auswirkt. Als Antrieb für den Stellmotor kann jede Art wie z. B. elektrisch, pneumatisch, hydraulisch, mechanisch oder manuell eingesetzt werden.

Während des Spülvorgangs wird die Dichtung nicht mit Luft beaufschlagt. Durch die Vorspannung in der Dichtungsnut kommt es zu keiner Totraumbildung, jedoch entsteht ein Spalt zwischen dem Gehäusekanal und dem Drehküken. Dies eröffnet neue Möglichkeiten in Bezug auf die Reinigung des Förderweichengehäuses. Dadurch, dass sich das Drehküken um 360° drehen kann und durch die konvexe Ausgestaltung des Innenraums ist es erstmals möglich, eine CIP-fähige Reinigung bei Förderrohrweichen durchzuführen. Während des Spülvorganges ist die Dichtung beabstandet und das Drehküken rotiert um 360°. Dies ermöglicht eine Spülung des gesamten Innenraums des Gehäuses.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Fig. 1:: Schematisierte Darstellung der Förderrohrweiche in der Durchgangstellung
- Fig. 2: Schnitte durch die Förderrohrweiche nach Fig.1
- Fig.3: schematisierte Darstellung der Förderrohrweiche in der Abzweigstellung
- Fig.4: schematisierte Darstellung der Förderrohrweiche in der Sperrstellung
- Fig.5: schematisierte Darstellung der Förderrohrweiche in der Spülstellung
- Fig.6: schematischer Darstellung der Dichtungsvorrichtung
- Fig.7: schematische Darstellung der Dichtung im vorgespannten Zustand
- Fig.8: schematische Darstellung der Dichtung im aufgeblasenen Zustand
- Fig.9: Schnitt durch die Dichtungsanordnung im Schaftbereich
- Fig.10: schematische Dichtungsanordnung an der Deckel-Gehäuse Verbindung

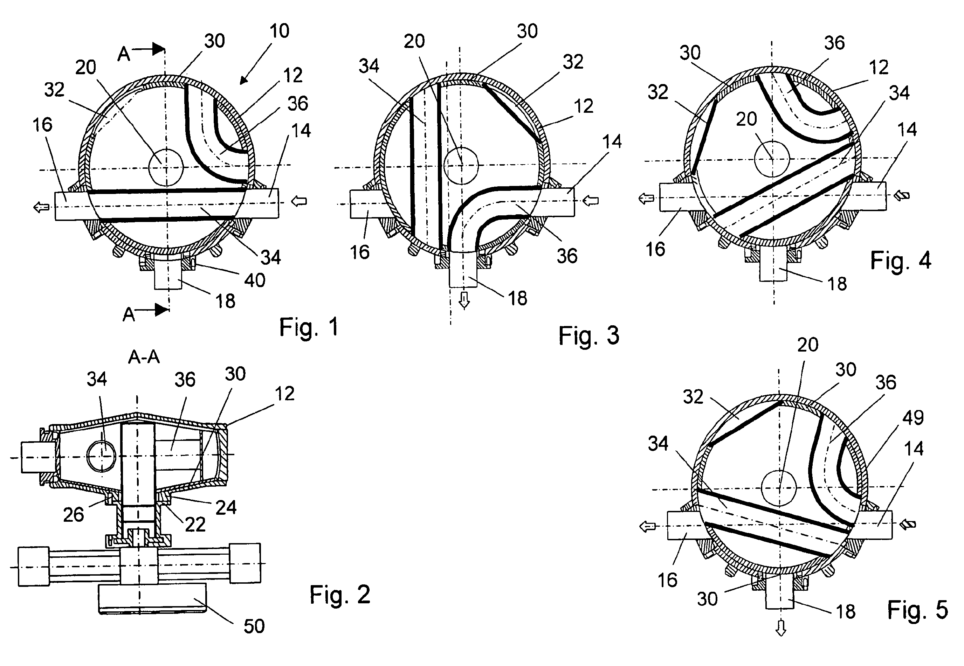

In der Abbildung 1 wird schematisch ein Schnitt durch die erfindungsgemäße Förderrohrweiche gezeigt. Die Förderrohrweiche 10 besteht dabei aus einem Gehäuse 12 und einem innenliegenden Drehküken 30. An dem Gehäuse 12 sind erfindungsgemäß ein Rohrzugang 14 und zwei Rohrabgänge 16, 18 angeordnet. Durch die Anzahl der Rohrzu- bzw. -abgänge ist die vorliegende Förderrohrweiche als 3-Wege-Weiche (2*Wege + 1*Sperrstellung) ausgebildet. Für die vorliegende Erfindung soll jedoch jede beliebe Anzahl von Rohrzu- bzw- Rohrabgängen geschützt werden. An den Rohrzu- bzw. Rohrabgängen sind in einer bevorzugten Ausführungsform Förderkanäle angeschlossen.
Die Form des Gehäuses 12 ist sowohl im Aussen- als auch im Innenbereich konvex ausgebildet, um ein selbstständiges Ablaufen des Schüttgutes oder der Flüssigkeit zu gewährleisten. Unter dem Begriff ballig wird hierbei eine nach oben gewölbte Oberfläche verstanden.

An jedem Rohrzu- bzw. Rohrabgang 14, 16, 18 ist jeweils eine Dichtungen 40 angeordnet, die eine druckdichte Verbindung zwischen diesem und dem Kanal 34, 36 herstellt.

Das Drehküken 30 ist innerhalb des Gehäuses 12 und um 360° um den Schaft 20 drehbar angeordnet. Für den Einbau in das Gehäuse 12 weist das weitgehend zylindrisch ausgebildete Drehküken 30, an einer Seite einen Ausschnitt 32 auf.

Dieser ermöglicht einen reibungslosen Einbau in das ballig ausgeformte Gehäuse 12.

Die weitgehend zylindrisch verlaufende Gehäusewand des Drehkükens wird durch die Kanäle 34, 36 unterbrochen. Diese sind entweder als gerade Kanal 34 oder als gebogener Kanal 36 im Innenraum des Drehkükens 30 ausgebildet. Der Kanal 34, 36 stellt eine Verbindung zwischen zwei Gehäusewänden des Drehkükens 30 her. Durch die Drehmöglichkeit um den Schaft 20 können so unterschiedliche Positionen des Drehkükens 30 gegenüber dem Gehäuse der Förderrohrweiche 12 und somit unterschiedliche Förderstellungen eingenommen werden. In Figur 1 wird beispielsweise eine Durchgangsstellung zwischen dem Rohrzugang 14, dem gerade ausgebildeten Kanal 34 und dem Rohrabgang 16 erzielt. Durch die Ausbildung des Drehkükens wird in der Durchgangstellung ein Verschluss des Rohrabganges 18 erzielt.
Der gebogene Kanal 36 ist in dieser Drehkükenstellung ohne Funktion. Durch die Anordnung der Dichtungen 40 an jedem Rohrzu- bzw. Rohrabgang kann eine druckdichte Verbindung sowohl zwischen dem Rohrzugang 14 und dem Kanal 34 als auch zwischen dem Kanal 34 und dem Rohrabgang 16 erzielt werden. Zusätzlich dichtet eine gehäuseseitige Dichtung 40 den Übergang zwischen dem Rohrabgang 18 und dem Drehkükengehäuse 30 druckdicht ab.

Abbildung 2 zeigt einen Schnitt durch die Förderrohrweiche 10 in Durchgangstellung. Daraus ist die ballige bzw. konvexe Form der Förderrohrweiche ersichtlich. Das Drehküken 30 ist von dem Gehäuse der Förderrohrweiche 12 umgeben und bildet weitgehend eine ähnliche Form aus. Mithilfe eines Antriebs 50 lässt sich das Drehküken 30 über eine Schaftverbindung 20 drehen. Der Antrieb kann dabei in jeder Form ausgebildet sein, beispielhaft ist hier ein elektrischer, hydraulischer, pneumatischer oder manueller Antrieb erwähnt. Durch die Anordnung des Schafts 20 und der Übergang auf das Förderrohrweichengehäuse 12 mit dem Flansch 22 ist eine Dichtung 26 nötig. Dabei ist die Dichtung 26 so angeordnet, um einen Spalt 24 weitgehend zu verringern. Auf die Dichtungsanordnung soll im Folgenden in Figurenbeschreibung 6 ff. näher eingegangen.

In der Abbildung 3 ist die Förderrohrweiche 10 in der Abzweigstellung gezeigt. Hierbei ist der Rohrzugang 14 mit dem gebogenen Kanal 38 des Drehkükens 30 verbunden. Der Kanal 38 ist wiederum mit dem Rohrabgang 18 verbunden. Durch diese Anordnung findet eine Abzweigstellung statt. Der gerade Kanal 34 ist dabei ohne Funktion. Das Drehküken 30 verschließt nun mit seinem Gehäuse in der oben beschriebenen Abzweigstellung den Rohrabgang 16, wobei eine Dichtung 40 auf Seite des Förderrohrweichengehäuses an der Gehäusewand des Drehkükens 30 anliegt. Somit wird in der Abzweigstellung ein Durchfluss zwischen dem Rohrzugang 14 und dem Rohrabgang 18 ermöglicht, alle weiteren möglichen Rohrabgänge 18 sind dabei verschlossen.

Die Förderrohrweiche 10 in Sperrstellung wird in Figur 4 gezeigt. Hierbei ist das Drehküken 30 gegenüber dem Gehäuse der Förderrohrweiche 12 so ausgerichtet, dass alle Rohrzu- und Rohrabgänge 14, 16, 18 verschlossen sind. Durch die Anordnung von Dichtungen 40 an jedem Rohrzu- und Rohrabgang 14, 16, 18 wird ein druckdichter Verschluss erreicht. Dies stellt einen wesentlichen Vorteil bei einer großen verfahrentechnischen Anlage dar. Wird z. B. nur ein Silo von mehreren gereinigt, kann über die vorliegende Förderrohrweiche die restliche Anlage getrennt werden. Neu bei der vorliegenden Ausführungsform ist auch, dass im Fall einer Sperrstellung nur der Rohrzugang 14 von Reinigungsflüssigkeit berührt wird. Durch die gehäuseseitige Dichtungsanordnung 40 wird das gesamte Drehküken 30 im Falle einer Sperrstellung abgetrennt.

Figur 5 zeigt die Spülstellung bei der erfindungsgemäßen Förderrohrweiche. Hierbei dreht sich das Drehküken um 360° innerhalb des Gehäuses der Förderrohrweiche 12. Durch die Ausbildung des Gehäuses 12 mit den unterschiedlichen Rohrzu- und Rohrabgängen 14,16,18 und dem Drehküken 30 ist CIP-fähiger Spülvorgang mit einer Spülflüssigkeit erstmals möglich.

Der Spülvorgang läuft beispielsweise wie folgt ab:
- Drehküken 30 in Spülstellung bringen und langsames Rotieren des Drehkükens 30 um den Schaft 20
- Einleiten der Spülflüssigkeit über den Rohzugang 14
- Beaufschlagung des Spaltes 49 und der Kanäle 34, 36 mit der Spülflüssigkeit durch die Rotation des Drehkükens innerhalb des Gehäuses der Förderrohrweiche 12
- Abfluss der Spülflüssigkeit über den Rohrabgang 18

Als eine weitere Variante kann das Drehküken 30 über zusätzliche Abflusskanäle bzw. Abflussstutzen verfügen, die ein leichtes Ablaufen der Spülflüssigkeit in der jeweiligen Einbaulage ermöglichen.

Damit ist es erstmals möglich, den Innenraum des Förderrohrweichengehäuses 10 mit Spülflüssigkeit zu spülen, ohne eine Demontage vorzunehmen - die Anlage wird damit CIP-fähig.

Wichtig ist dabei, dass die Spülflüssigkeit bei der Drehbewegung des Drehkükens 30 sowohl in die Kanäle 34,36 als auch in den Spalt 49, der sich zwischen dem Gehäuse der Förderrohrweiche 12 und dem Drehküken 30 ausbildet, gelangt. Zusätzlich ist das Förderrohrgehäuse so ausgebildet, dass jede Spülflüssigkeit selbstständig entweder über die Rohrzu- und Rohrabgänge 12, 14, 16 oder durch zusätzlich Spülkanäle aus dem Gehäuse der Förderrohweiche 12 abläuft. Dies wird weitgehende durch die ballige bzw. konvexe Ausbildung der Gehäusewände 12 bzw. die Ausbildung des Drehkükens 20 erreicht.

Ein weiterer Vorteil ist die Ausbildung der Dichtung 40. Diese liegt unter einer Vorspannung in der Nut und verringert so eine Totraumbildung, in der sich mögliche Ablagerungen festsetzen könnten. Im Spülvorgang ist die Dichtung 40 nicht mit Druck beaufschlagt und hat keinen Kontakt zum Drehküken 30. Das Drehküken kann somit ohne Widerstand innerhalb des Gehäuses der Förderrohrweiche 12 gedreht werden. Dies verhindert einen Verschleiß der Dichtung und verringert das anfallende Drehmoment auf den Antrieb 50.

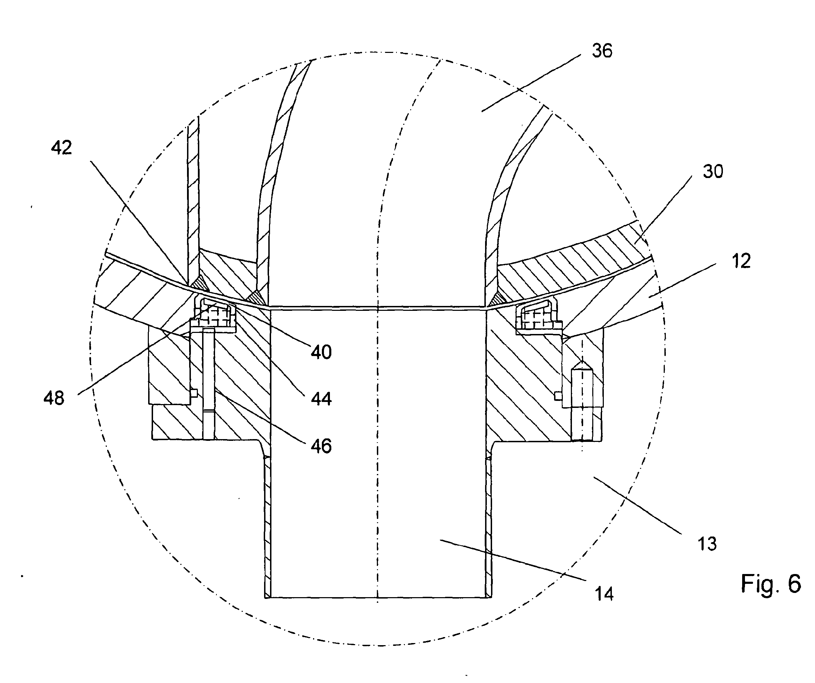

In Figur 6 ist die Ausführung der Dichtung 40 näher dargestellt. Als Beispiel soll hier der Übergang von dem Rohrzugang 14 des Gehäuses der Förderrohrweiche 12 auf den gebogenen Kanal 36 des Drehkükens 30 dargestellt werden.

An dem Gehäuse der Förderrohrweiche 12 ist eine flanschartige Dichtungsvorrichtung 13 ausgebildet. Diese dient zur Aufnahme der Dichtung 40, der Druckvorrichtung 44, dem Luftpolster und dem Druckstück46.

Über die Druckvorrichtung 44 wird eine Vorspannung auf die Dichtung 40 ausgeübt. Diese Vorspannung dient zur Abdichtung der Druckvorrichtung 44 gegenüber der Dichtungsvorrichtung 13 und vermeidet so eine Totraumbildung. Die Vorspannkraft auf die Druckvorrichtung wird von einem Druckstück 46 aufgebracht, das unterhalt der Vorrichtung ansetzt.

Das Druckstück kann durch jegliche Krafteinwirkung bedient werden, bespielweise sei hier eine mechanische, hydraulische oder pneumatische Druckausübung genannt. Vorteilhaft ist, dass das Druckstück länglich ausgebildet ist und von außerhalb der Dichtvorrichtung 13 bedient werden kann.

Unterhalb der Dichtung 40 befindet sich in der Druckvorrichtung ein Luftpolster 48. Mithilfe des Luftpolsters 48 ist die Dichtung 40 in Richtung des Drehkükens verschiebbar, womit eine druckdichte Abdichtung gegenüber dem Gehäuse 12 stattfindet. In dem hier gezeigten Beispiel befindet ist das Luftpolster 48 noch nicht befüllt.

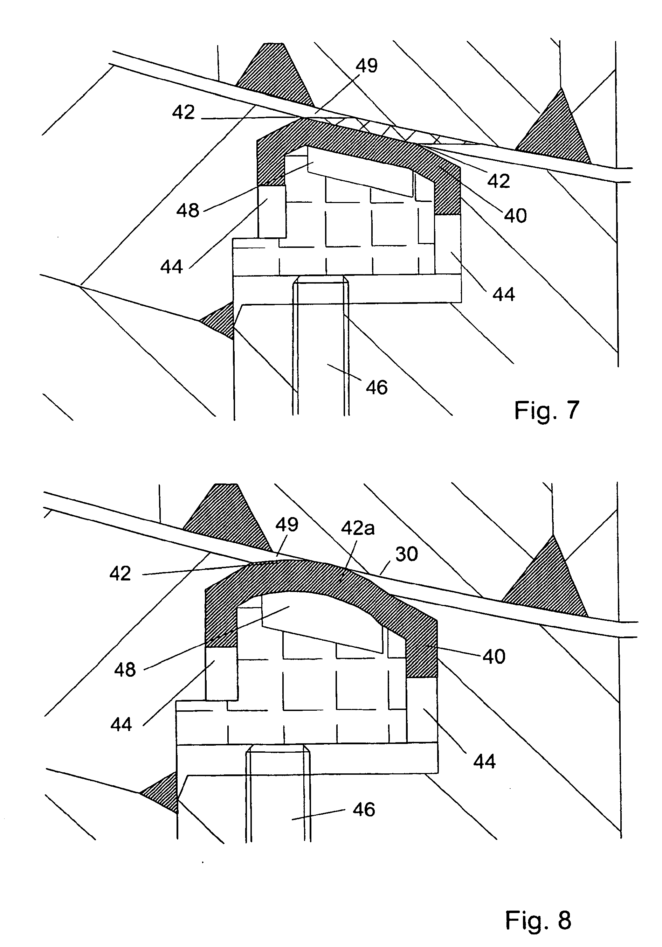

Figur 7 zeigt die Dichtung 40 im vorgespannten Zustand in der Druckvorrichtung 44. Die Vorspannkraft auf die Druckvorrichtung 44 wird durch das Druckstück 46 ausgeübt. Die Vorspannung der Dichtung 40 bewirkt eine Abdichtung des Gehäuses der Förderrohrweiche 12 gegenüber der Umwelt. Dabei liegt die Dichtung 40 mit den Dichtflächen 42 plan an der Innenseite der Gehäusewand der Förderrohrweiche 12 an. Zwischen dem Gehäuse der Förderrohrweiche 12 und dem Drehküken bildet sich ein Spalt 49 aus. Eine Drehung des Drehkükens 30 kann in diesem Zustand ohne einen Widerstand seitens der Dichtung 40 stattfinden.

In Figur 8 wird die Dichtung 40 mit aufgeblasenen Luftpolster 48 dargestellt. Das Luftpolster 48 bewirkt eine Dehnung der Dichtung 40 - die Dichtfläche 42a liegt an dem Gehäuse des Drehkükens 30 an. Der Spalt 49 ist nun druckdicht verschlossen. Die Vorspannung durch die Druckvorrichtung 44 und das Druckstück 46 besteht weiterhin.
Durch das Anliegen der Dichtung 40 an dem Gehäuse des Drehkükens 30 sind nun neue Möglichkeiten in Bezug auf das Einsatzgebiet einer Förderweiche gegeben. Damit ist es erstmals möglich, mit einer Förderrohrweiche eine komplette Absperrung eines Abzweiges von einer verfahrenstechnischen Anlage zu erzielen. Die Absperrung erfolgt dabei auf der Gehäuseseite der Förderrohrweiche 12, was eine wesentlichen Vorteil in Bezug auf Hygiene und Reinigungserleichterung hat.

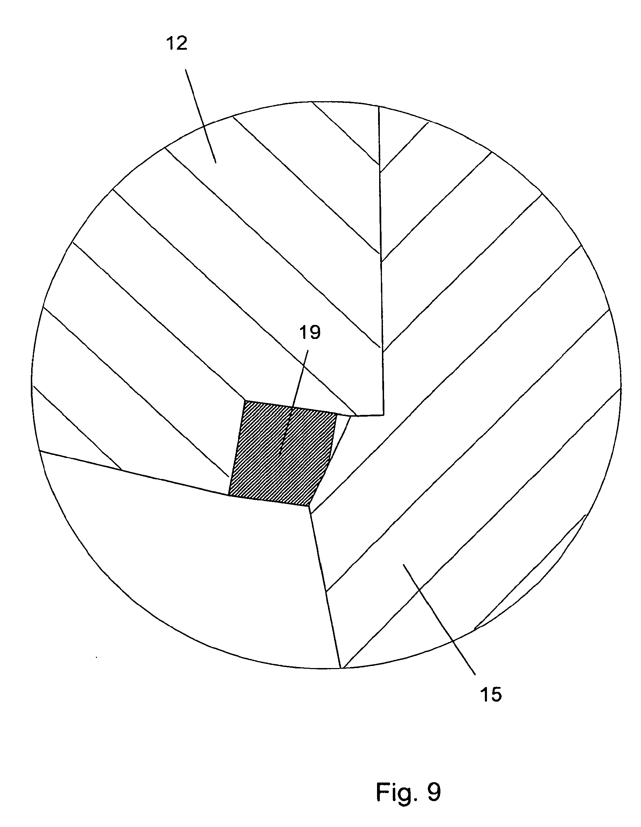

Figur 9 zeigt die Abdichtung des Gehäuses der Förderrohrweiche 12 mit dem Deckel 15. Hierbei wird die Dichtung 19 zwischen die beiden Bauteile 12, 15 geklemmt.

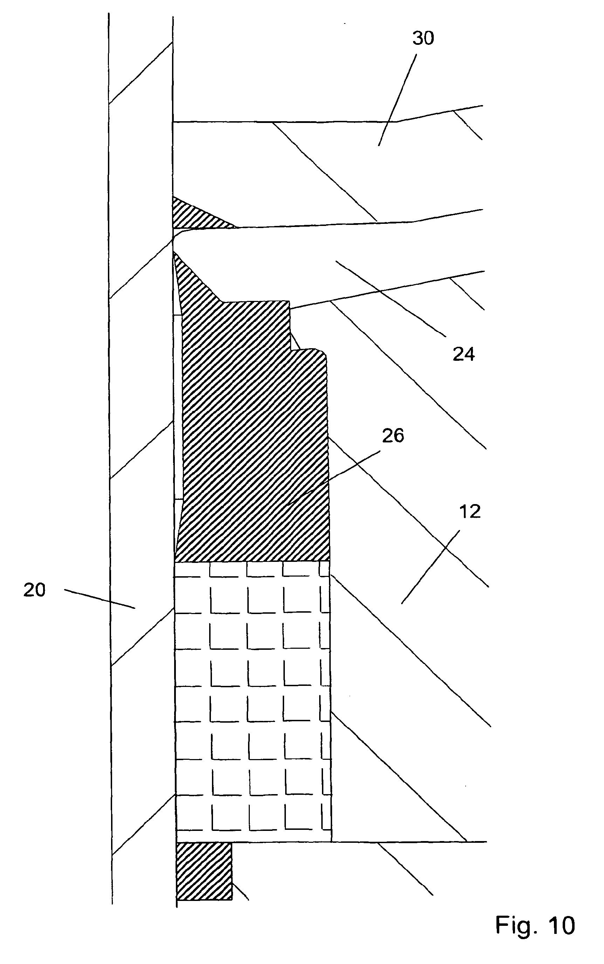

In Figur 10 ist die Abdichtung gegenüber dem Schaft 20, dem Gehäuse der Förderrohrweiche 12 und dem Gehäuse des Drehkükens 30 dargestellt. Hierbei wird über ein Druckstück 28 eine Kraft auf die Dichtung 26 ausgeübt. Die Dichtung 26 verschließt somit den Spalt 24 zwischen dem Gehäuse des Drehkükens 30 und dem Gehäuse der Förderrohrweiche 12.

### Zeichnungslegende

- 10.: Förderrohrweiche
- 12.: Gehäuse Förderrohrweiche
- 13.: Dichtungsvorrichtung
- 14.: Rohrzugang
- 15.: Deckel
- 16.: Rohrabgang
- 18.: Rohrabgang
- 19.: Dichtung
- 20.: Schaft (Welle)
- 22.: Flansch
- 24.: Spalt (Totraum)
- 26.: Dichtung
- 28.: Druckstück (Dichtung Schaftbereich)
- 30.: Gehäuse Drehküken
- 32.: Ausschnitt
- 34.: Kanal (gerade)
- 36.: Kanal (gebogen)
- 40.: Dichtung
- 42.: Dichtfläche
- 44.: Druckvorrichtung
- 46.: Druckstück
- 48.: Luftpolster
- 49.: Spalt (Gehäuse 12 und Drehküken 30)
- 50.: Antrieb

## Patentansprüche

1. Förderrohrweiche (10) für Schüttgüter, Pasten und Flüssigkeiten mit einem Gehäuse (12) und einem darin drehbar angeordneten Drehküken (30), wobei das Gehäuse wenigstens drei Rohrzu- bzw. Rohrabgänge (14, 16, 18) aufweist, sodass verschiedene Leitungssysteme einer verfahrenstechnischen Anlage durch entsprechende Stellung des Drehkükens (30) verbunden werden können, wobei das Drehküken (30) eine zylindrische Mantelfläche und abgeschrägte oder ballige Deckfläche aufweist, **dadurch gekennzeichnet, dass** die konvexe Ausbildung des Gehäuses der Rohrweiche mit nach oben gewölbten Innenwänden und des Drehkükens (30) eine Reinigung im eingebauten Zustand (Cleaning in Place) ohne Ausbau des Drehkükens **dadurch** ermöglicht, dass das Gehäuse totraumfrei ausgebildet ist und dass ein freies, selbstständiges Ablaufen der Flüssigkeit durch mindestens einen gehäuseseitigen Auslasskanal (18) erfolgt.

2. Förderrohrweiche nach Anspruch 1, **dadurch gekennzeichnet, dass** an dem Gehäuse der Förderrohrweiche (12) eine Dichtungsvorrichtung (13) angeordnet ist, die aus einer Dichtung (40), einer Druckvorrichtung (44), einem Druckstück (46) und einem Luftpolster (48) besteht.

3. Förderrohrweiche nach Anspruch 2, **dadurch gekennzeichnet, dass** das Druckstück (46) zusammen mit der Druckvorrichtung (44) eine Vorspannung auf die Dichtung (40) zur Abdichtung gegenüber dem Gehäuse ausübt.

4. Förderrohrweiche nach Anspruch 2 oder 3, **dadurch gekennzeichnet, dass** die Dichtung (40) durch ein anliegendes Luftpolster (48) dehnbar ist und eine Abdichtung gegenüber dem Drehküken (30) ausübt.

5. Förderrohrweiche nach einem der Ansprüche 2 bis 4, **dadurch gekennzeichnet, dass** das Drehküken über mindestens einen geraden Kanal (34) und über mindestens einen gebogenen Kanal (36) verfügt.

6. Förderrohrweiche nach einem der Ansprüche 1 bis 5, **dadurch gekennzeichnet, dass** das Drehküken (30) neben seinen zwei Stellmöglichkeiten zur wahlweisen Verbindung der Kanäle (34 und 35) eine dritte Stellmöglichkeit aufweist, mit der ein nicht genutzter Abgang oder Zulauf zwangsläufig dicht verschiessbar ist.

7. Förderrohrweiche nach einem der Ansprüche 1 bis 6, **dadurch gekennzeichnet, dass** das Drehküken (30 an einer Seite einen Ausschnitt (32) aufweist um einen reibungslosen Einbau in das ballig ausgeformte Gehäuse (12) zu ermöglichen.

8. Verfahren zur Reinigung einer Förderrohrweiche nach Anspruch 1 im eingebauten Zustand, wobei folgende Schritte ausgeführt werden:
Versetzen des Drehkükens (30) in eine Spülstellung, und Rotieren des Drehkükens (30) um eine Achse,
Einleiten der Spülflüssigkeit in das Gehäuse der Förderrohrweiche (12) Beaufschlagung des Spaltes (49) und der Kanäle (34, 36) mit der Spülflüssigkeit während der Rotation des Drehkükens (30) innerhalb des Gehäuses der Förderrohrweiche (12),
Abfluss der Spülflüssigkeit über den Auslasskanal (18) oder einen zusätzlichen Rohrstutzen.

9. Verfahren nach Anspruch 8, **dadurch gekennzeichnet, dass** nach dem Reinigungsvorgang ein Trocknungsvorgang durch Einleiten von Luft oder Gas über einen Rohrzu- bzw. Rohrabgang (14,16,18) durchgeführt wird.

10. Verfahren nach einem der Ansprüche 8 oder 9, **dadurch gekennzeichnet dass** während des Spülvorgangs die Dichtung nicht mit Luft beaufschlagt wird und das Drehküken um 360 Grad rotiert wird.

11. Verfahren nach einem der Ansprüche 8 bis 10, **dadurch gekennzeichnet dass** in einen Sperrstellung das Drehküken (30) gegenüber dem Gehäuse (12) der Förderrohrweiche (10) so ausgerichtet ist, dass alle Rohrzu- und Rohrabgänge (14, 16, 18) verschlossen werden.

## Claims

1. Switch (10) for a transport tube for bulk materials, pastes and liquids with a housing (12) and a rotary plug (30) arranged rotatably therein, the housing exhibiting at least three tube inlets and tube outlets (14, 16, 18), so that different pipe systems of a process installation can be connected by appropriate positioning of the rotary plug (30), the rotary plug (30) exhibiting a cylindrical generated surface and bevelled or spherical covering surface, **characterised in that** the convex design of the housing of the switch for the tube with upwardly curved internal walls and the rotary plug (30) allows cleaning in place without removing the rotary plug, **in that** the housing is formed free of dead space and **in that** free independent drainage of the liquid takes place through at least one outlet channel (18) on the housing side.

2. Switch for a transport tube according to claim 1, **characterised in that** arranged on the housing (12) of the switch for the transport tube there is a sealing device (13) which consists of a seal (40), a pressure device (44), a thrust element (46) and an air cushion (48).

3. Switch for a transport tube according to claim 2, **characterised in that** the thrust element (46) together with the pressure device (44) exerts a preload on the seal (40) for sealing in relation to the housing.

4. Switch for a transport tube according to claim 2 or 3, **characterised in that** the seal (40) is capable of expansion through an air cushion (48) bearing thereon and exerts a sealing action in relation to the rotary plug (30).

5. Switch for a transport tube according to one of claims 2 to 4, **characterised in that** the rotary plug has at least one straight channel (34) and at least one curved channel (36).

6. Switch for a transport tube according to one of claims 1 to 5, **characterised in that** in addition to its two possible positions for selective connection of the channels (34 and 35), the rotary plug (30) exhibits a third possible position in which an unused outlet or inlet can be forcibly sealed.

7. Switch for a transport tube according to one of claims 1 to 6, **characterised in that** on one side the rotary plug (30) exhibits a cut-out (32) in order to allow smooth installation in the spherically-shaped housing (12).

8. Method for cleaning a switch for a transport tube according to claim 1 in place, for which the following steps are carried out:
movement of the rotary plug (30) into a rinsing position, and rotation of the rotary plug (30) about one axis,
introduction of the rinsing liquid into the housing (12) of the switch for a transport tube,
treatment of the gap (49) and the channels (34, 35) with the rinsing liquid during the rotation of the rotary plug (30) inside the housing (12) of the switch for a transport tube,
discharge of the rinsing liquid through the outlet channel (18) or an additional tube connector.

9. Method according to claim 8, **characterised in that** after the cleaning operation a drying operation is carried out by introducing air or gas through a tube inlet or tube outlet (14, 16, 18).

10. Method according to one of claims 8 or 9, **characterised in that** during the rinsing operation the seal is not loaded with air and the rotary plug is rotated through 360°.

11. Method according to one of claims 8 to 10, **characterised in that** in a blocking position the rotary plug (30) is aligned in relation to the housing (12) of the switch (10) for a transport tube so that all the tube inlets and tube outlets (14, 16, 18) are closed.

## Revendications

1. Aiguillage pour tuyau de transport (10) pour produits en vrac, pâtes et liquides, avec une enveloppe (12) et un boisseau tournant (30) disposé en rotation dans celle-ci, étant précisé que l'enveloppe comporte au moins trois entrées et sorties de tuyau (14, 16, 18), de sorte que différents systèmes de conduites d'une installation pour procédés industriels peuvent être reliés grâce à une position correspondante du boisseau tournant (30), et que le boisseau tournant (30) présente une surface latérale cylindrique et une surface de recouvrement inclinée ou bombée, **caractérisé en ce que** la forme convexe de l'enveloppe de l'aiguillage de tuyau pourvue de parois intérieures bombées vers le haut, et du boisseau tournant (30) permet un nettoyage à l'état monté (Cleaning in Place) sans démontage du boisseau tournant, grâce au fait que ladite enveloppe est conçue sans espace mort, et qu'un écoulement libre, automatique, du liquide a lieu grâce à au moins un conduit de sortie (18) situé côté enveloppe.

2. Aiguillage pour tuyau de transport selon la revendication 1, **caractérisé en ce qu'**il est prévu sur l'enveloppe de l'aiguillage pour tuyau de transport (12) un dispositif d'étanchéité (13) qui se compose d'un joint d'étanchéité (40), d'un dispositif de pression (44), d'une pièce de pression (46) et d'un coussin d'air (48).

3. Aiguillage pour tuyau de transport selon la revendication 2, **caractérisé en ce que** la pièce de pression (46) exerce avec le dispositif de pression (44) une contrainte sur le joint d'étanchéité (40) pour réaliser l'étanchéité par rapport à l'enveloppe.

4. Aiguillage pour tuyau de transport selon la revendication 2 ou 3, **caractérisé en ce que** le joint d'étanchéité (40) est extensible grâce à un coussin d'air (48) appliqué, et réalise une étanchéité par rapport au boisseau tournant (30).

5. Aiguillage pour tuyau de transport selon l'une des revendications 2 à 4, **caractérisé en ce que** le boisseau tournant dispose d'au moins un conduit droit (34) et d'au moins un conduit coudé (36).

6. Aiguillage pour tuyau de transport selon l'une des revendications 1 à 5, **caractérisé en ce que** le boisseau tournant (30) présente, en plus de ses deux positions de réglage pour relier sélectivement les conduites (34 et 35), une troisième position de réglage grâce à laquelle une sortie ou une entrée non utilisée peut être fermée de manière forcée de manière étanche.

7. Aiguillage pour tuyau de transport selon l'une des revendications 1 à 6, **caractérisé en ce que** le boisseau tournant (30) présente sur un côté une découpe (32) pour permettre un montage sans friction dans l'enveloppe (12) de forme bombée.

8. Procédé pour nettoyer un aiguillage pour tuyau de transport selon la revendication 1 à l'état monté, étant précisé que les étapes suivantes sont réalisées :
passage du boisseau tournant (30) dans une position de rinçage et rotation du boisseau (30) sur un axe,
introduction du liquide de rinçage dans l'enveloppe de l'aiguillage pour tuyau de transport (12),
sollicitation de l'interstice (49) et des conduits (34, 36) avec le liquide de rinçage pendant la rotation du boisseau (30) à l'intérieur de l'enveloppe de l'aiguillage (12),
écoulement du liquide de rinçage par le conduit de sortie (18) ou par une tubulure supplémentaire.

9. Procédé selon la revendication 8, **caractérisé en ce qu'**après l'opération de nettoyage, une opération de séchage est réalisée grâce à l'introduction d'air ou de gaz par une entrée ou une sortie de tuyau (14, 16, 18).

10. Procédé selon l'une des revendications 8 ou 9, **caractérisé en ce que** pendant l'opération de rinçage, le joint d'étanchéité n'est pas sollicité avec de l'air, et le boisseau tournant est tourné à 360 degrés.

11. Procédé selon l'une des revendications 8 à 10, **caractérisé en ce que** dans une position de coupure, le boisseau tournant (30) est orienté par rapport à l'enveloppe (12) de l'aiguillage pour tuyau de transport (10) de telle sorte que toutes les entrées et sorties de tuyau (14, 16, 18) soient fermées.
